# EUROPEAN PATENT APPLICATION

(11) **EP 4 814 195 A1**
(43) Date of publication of application: **30.09.2026**
(21) Application number: 24893924.1
(22) Date of filing: 22.10.2024
(51) Int. Cl.: D21H 11/20, C08K 3/16, C08L 1/02, D21H 11/18, D21H 15/02

(54) **MODIFIED CELLULOSE FIBERS AND MODIFIED CELLULOSE MICROFIBERS**

(30) Priority: 21.11.2023 JP 2023197687
(71) Applicant: Daio Paper Corporation, Ehime 799-0492 (JP)
(72) Inventor: LIU, Xiaoyue, Shikokuchuo-shi, Ehime 799-0402 (JP)
(74) Representative: Meissner Bolte Partnerschaft mbB
(86) International application number: PCT/JP2024/037522
(87) International publication number: WO 2025/109931

(57) **Abstract**

[Problem] To provide a novel cellulose microfiber the applications of which are not significantly limited or a cellulose fiber that serves as a raw material of a cellulose microfiber.

[Solution] A modified cellulose fiber, in which the modified cellulose fiber has been modified with a polyvalent carboxylic acid group, a first dissociated acid amount/second dissociated acid amount is 0.25 to 1.0, and a first dissociated acid amount is 0.35 mmol/g or more. In addition, a modified cellulose microfiber, in which this modified cellulose fiber has an average fiber diameter of 100 nm or less.

## Description

### Technical Field

The present invention relates to a modified cellulose fiber and a modified cellulose microfiber.

### Background Art

In recent years, nanotechnology intended to micro-fibrillate a substance to the nanometer level and obtain new physical properties different from the conventional properties of the substance has been attracting attention. Cellulose microfibers produced from pulp, which is a cellulose-based raw material, by a chemical treatment, a pulverization treatment, or the like are excellent in terms of strength, elasticity, thermal stability, and the like and are thus expected to be used in industrial applications as filter materials, filter aids, ion exchange substrates, fillers for chromatographic analyzers, fillers for compounding resins and rubbers and applications of compounding agents for cosmetics such as lipstick, powder cosmetics, and emulsified cosmetics. In addition, cellulose microfibers have excellent aqueous dispersibility and are thus expected to be used in many applications such as foods, cosmetics, viscosity retention agents of paints and the like, food material dough strengtheners, moisture retention agents, food stabilizers, low-calorie additives, and emulsion-stabilizing aids.

Conventionally, in order to obtain such cellulose microfibers, methods in which a cellulose fiber is mechanically defibrated with a high-pressure type homogenizer, a high-speed rotation type homogenizer, an ultrasonic homogenizer, or the like have been adopted (for example, see PTL 1 and the like). However, in these methods, a large amount of energy was required to proceed with defibration. Therefore, in order to reduce this energy for defibration, a method in which a cellulose fiber is defibrated by a TEMPO oxidation method has been proposed. However, this method has a difficulty in terms of economic efficiency and has a problem with de-oiling. Therefore, at the moment, a phosphate esterification method or the like has also been proposed. However, reliance only on this technology may cause a problem such as marine pollution. Therefore, other new techniques need to be proposed.

Incidentally, as a technique different from the above-described method in which a cellulose fiber is modified, there have been existing methods in which a cellulose fiber is modified with citric acid (see PTL 2 and 3). However, in the proposal of PTL 2, in short, citric acid modification is performed by digestion, the viscosity of a dispersion becomes low, and the applications thereof are thus significantly limited. In addition, the proposal of PTL 3 has a problem in that the transparency of a dispersion becomes low. In this respect, there is a demand for the transparency of the dispersion being high particularly in the applications of food, cosmetics, or the like, and there is no other option but to enhance the transparency to widen the applications of cellulose microfibers.

### Citation List

### Patent Literature

PTL 1: Japanese Patent Application Publication No. 2010-216021
PTL 2: Japanese Patent Application Publication No. 2015-140403
PTL 3: Japanese Patent Application Publication No. 2019-189792

### Summary of Invention

### Technical Problem

An object that the present invention is intended to achieve is to provide a novel cellulose microfiber the applications of which are not significantly limited or a cellulose fiber that serves as a raw material of a cellulose microfiber.

### Solution to Problem

In order to achieve the above-described object, the present inventors and the like paid attention to a method for modifying a cellulose fiber with citric acid. This is because citric acid is a natural substance and has various merits such as being reactive under a condition close to being neutral and being reactive under a low-temperature condition. However, as described above, the applications of conventional cellulose microfibers modified with citric acid are significantly limited.

Therefore, the present inventors and the like independently repeated various studies and consequently found that when modified with citric acid, cellulose fibers become easy to crosslink, and when the cellulose fibers are crosslinked, the fibers become thicker, and the viscosity and transparency thus decrease. In addition, an idea obtained based on such knowledge is the following means.

In PTL 3, it is described that "according to the literal meaning, cellulose nanofibers are thought to refer to cellulose fibers having a fiber diameter (or fiber width) of several nanometers to several hundred nanometers; however, in the present specification, cellulose nanofibers are not limited to such size. For example, cellulose fibers having a fiber diameter of up to about 3000 nm are also thought to be the cellulose nanofibers." and the fiber diameters of cellulose nanofibers can be freely adjusted. However, as described above, when modified with citric acid, cellulose fibers become easy to crosslink, and it becomes difficult to reduce the fiber diameters. It is needless to say that reduction in fiber diameters is not impossible, but this requires strict reaction conditions such as the use of an excess of a chemical, the fiber lengths of the cellulose fibers become extremely short, and consequently, the viscosities decrease.

### (Means According to Claim 1)

A modified cellulose fiber, wherein the modified cellulose fiber is modified with a polyvalent carboxylic acid group,
a first dissociated acid amount/second dissociated acid amount is 0.25 to 1.0, and a first dissociated acid amount is 0.35 mmol/g or more.

### (Means According to Claim 2)

The modified cellulose fiber according to claim 1, wherein the modified cellulose fiber is carbamated.

### (Means According to Claim 3)

The modified cellulose fiber according to claim 1, wherein a total light transmittance of a dispersion (concentration: 0.2 mass%) is 65% or more, and a B-type viscosity of a dispersion (concentration: 1.0 mass%) is 40000 cP or higher.

### (Means According to Claim 4)

The modified cellulose fiber according to claim 1, wherein the polyvalent carboxylic acid is citric acid.

### (Means According to Claim 5)

A modified cellulose microfiber, wherein the modified cellulose fiber according to any one of claims 1 to 4 has an average fiber diameter of 100 nm or less.

### Advantageous Effects of Invention

According to the present invention, there are provided a novel modified cellulose microfiber the applications of which are not significantly limited and a modified cellulose fiber that serves as a raw material of a modified cellulose microfiber.

### Description of Embodiments

Next, an embodiment of the present invention will be described. The present embodiment is an example of the present invention.

### [Fiber and Dispersion]

A modified cellulose fiber of the present embodiment has been modified with a polyvalent carboxylic acid (preferably citric acid) group, a first dissociated acid amount/second dissociated acid amount is 0.25 to 1.0, and a first dissociated acid amount is 0.35 mmol/g or more. In addition, a modified cellulose microfiber has an average fiber diameter of 100 nm or less. Hereinafter, the present embodiment will be described in detail.

### (Dissociated Acid Amount)

As described above, when cellulose fibers are modified with citric acid or the like, the cellulose fibers become easy to crosslink, and the cellulose fibers bond to each other. Therefore, the fiber diameters tend to be large, and the transparency of a dispersion deteriorates. Incidentally, when performing a crosslinking reaction, the cellulose fibers (citric acid) contain only an acidic group (= primary acid group; hereinafter also simply referred to as "strong acid group or the like"), and on the other hand, when not performing a crosslinking reaction, the cellulose fibers contain the strong acid group or the like and an acidic group having a lower acidity (= second acid group; hereinafter also simply referred to as "weak acid group or the like"). Therefore, the degree of crosslinking can be specified by specifying the proportions of the strong acid group or the like and the weak acid group or the like contained in the cellulose fiber, which serves as a guideline for curbing an increase in the fiber diameters of the cellulose fibers even in a case where the cellulose fibers have been modified with citric acid.

Incidentally, in neutralization titration, the increment (the differential value of the pH with respect to the amount of an alkali dropped) may be maximized at two points in a curve obtained by plotting the pH with respect to the amount of the alkali added. Here, between these maximum values, a maximum point of the increment obtained earlier after the addition of the alkali is referred to as a first end point, and a maximum point of the increment obtained thereafter is referred to as a second end point. In addition, a value obtained by dividing the amount of the alkali required from the start of titration to the first end point by the solid content (g) in a dispersion to be titrated becomes equal to a first dissociated acid amount of fibrous cellulose contained in the dispersion used for titration (a value obtained by dividing the substance amount (mmol) of an acid ionized and neutralized until a first stage by the amount of the solid content (g) in the dispersion), a value obtained by dividing the amount of the alkali required from the first end point to the second end point by the solid content (g) in the dispersion to be titrated becomes equal to a second dissociated acid amount of the fibrous cellulose contained in the dispersion used for titration (a value obtained by dividing the substance amount (mmol) of an acid ionized and neutralized from the first stage to a second stage by the amount of the solid content (g) in the dispersion), and a value obtained by dividing the amount of the alkali required from the start of titration to the second end point by the solid content (g) in the dispersion to be titrated becomes equal to a total dissociated acid amount of the fibrous cellulose contained in the dispersion used for titration (a value obtained by dividing the total substance amount (mmol) of the acids ionized and neutralized until the second stage by the amount of the solid content (g) in the dispersion). Therefore, for example, the value obtained by dividing the amount of the alkali required from the start of titration to the first end point by the solid content (g) in the dispersion to be titrated becomes the amount of the strong acid group or the like introduced (mmol/g). Similarly, the value obtained by dividing the amount of the alkali required from the start of titration to the second end point by the solid content (g) in the dispersion to be titrated becomes the total amount of the amounts of the acid group introduced (mmol/g).

In measurement by neutralization titration, in a case where the amount of one drop of an alkaline solution such as an aqueous sodium hydroxide solution dropped is too large or a case where the titration interval is too short, an accurate value may not be obtained. Therefore, it is desirable to, for example, drop or the like 10 to 50 µL of an aqueous 0.1N sodium hydroxide solution every 5 to 30 seconds. In addition, in order to eliminate the influence of carbon dioxide dissolved in the dispersion, it is desirable to perform measurement while, for example, an inert gas such as nitrogen gas is blown into the dispersion from 15 minutes before the start of titration to the end of titration.

In the present embodiment, the first dissociated acid amount (mmol/g)/second dissociated acid amount (mmol/g) is preferably 0.25 to 1.0, more preferably 0.3 to 1.0, and particularly preferably 0.4 to 1.0. When the first dissociated acid amount/second dissociated acid amount is less than 0.25, the degree of crosslinking is high, and there is thus a concern that the transparency may be low. As the first dissociated acid amount/second dissociated acid amount becomes closer to 1, the degree of crosslinking is lower, and the transparency is thus higher.

The first dissociated acid amount is preferably 0.35 or more, more preferably 0.4 or more, and particularly preferably 0.5 or more. When the first dissociated acid amount is less than 0.35, the degree of esterification is insufficient, and there is thus a concern that the transparency may be low.

### (Raw Material Fiber)

As a raw material fiber of the cellulose fiber, for example, plant-derived fibers (plant fibers), animal-derived fibers, microorganism-derived fibers, and the like can be used. These fibers can be used singly or in combination as necessary. Here, a plant fiber is preferably used as the raw material fiber, and a pulp fiber, which is one kind of a plant fiber, is more preferably used. When the raw material fiber is a pulp fiber, it is easy to adjust the physical properties of the cellulose microfiber.

As the plant fiber, for example, wood pulp made from a broadleaf tree, a coniferous tree, or the like as a raw material, non-wood pulp made from straw, bagasse, or the like as a raw material, de-inked pulp (DIP) made from recovered de-inked paper, waste paper, or the like as a raw material, and the like can be used. These fibers can be used singly or in combination.

As the wood pulp, for example, chemical pulp such as leaf-tree kraft pulp (LKP) and needle-tree kraft pulp (NKP), thermomechanical pulp (TMP), de-inked pulp (DIP), and the like can be used. These pulps may be used singly or in combination.

The leaf-tree craft pulp (LKP) may be leaf-tree bleached kraft pulp, leaf-tree unbleached kraft pulp, or leaf-tree semi-bleached kraft pulp. The needle-tree kraft pulp (NKP) may be needle-tree bleached kraft pulp, needle-tree unbleached kraft pulp, or needle-tree semi-bleached kraft pulp. The de-inked pulp (DIP) may be magazine de-inked pulp (MDIP), newspaper de-inked pulp (NDIP), waste paper pulp (WP), or other de-inked pulp.

### (Modification)

In the cellulose fiber, some of hydroxy groups (-OH groups) have been substituted with polyvalent carboxylic acid groups, preferably, citric acid groups (polyvalent carboxylic acid modification). When the cellulose fiber is modified with a polyvalent carboxylic acid, defibration of the cellulose fiber becomes easy due to electrostatic repulsion and an osmotic effect of sodium ions being coordinated.

More preferably, in the cellulose fiber, some of the hydroxy groups have been substituted with carbamate groups (carbamate modification). When the cellulose fiber is modified with carbamate, the transparency or viscosity of the dispersion significantly improves. In particular, when citric acid modification and carbamate modification are both performed, hydrogen bonds are weakened, and the defibration of the cellulose fiber thus becomes easy.

The amount of the polyvalent carboxylic acid group introduced is a value evaluated based on a neutralization titration method using an automatic titrator. In this neutralization titration method, AUT-801 manufactured by DKK-TOA Corporation is used.

The amount of the carbamate group introduced is preferably 0.01 to 0.2 mmol per gram of the cellulose microfiber. When the amount introduced exceeds 0.2 mmol, there is a concern that citric acid modification may not proceed.

The amount of the carbamate group introduced is a value determined by a Kjeldahl method.

### (Microfiber)

The average fiber diameter (width) of the cellulose microfiber obtained by micro-fibrillating the cellulose fiber is preferably 3 to 100 nm and more preferably 4 to 20 nm. When the average fiber diameter is less than 3 nm, there is a concern that cellulose may dissolve in water and the physical properties such as strength or rigidity and dimensional stability of the cellulose microfiber may not be exhibited. On the other hand, when the average fiber diameter exceeds 100 nm, the average fiber diameter becomes about 1/10 of the wavelength of visible light, and there is thus a concern that the refraction or scattering of visible light may occur in a case where the cellulose microfiber has been dispersed in water (in the case of producing a water dispersion) and the light transmittance may not be sufficient.

The fiber diameter of the cellulose microfiber is measured as follows using an electron microscope.
First, 100 ml of a water dispersion of the cellulose microfiber having a solid content concentration of 0.01 to 0.1 mass% is filtered with a membrane filter made of TEFLON (registered trademark), and the solvent is replaced by 100 ml of ethanol once and 20 ml of t-butanol three times. Next, the water dispersion is freeze-dried and osmium-coated to obtain a sample. This sample is observed with an electron microscope SEM image at a magnification of 5,000 times, 10,000 times, or 30,000 times depending on the width of a constituent fiber. In this observation, two diagonal lines are drawn on the observation image, and three arbitrary straight lines passing through the intersection of the diagonal lines are further drawn. In addition, the widths of a total of 100 fibers intersecting these three straight lines are visually measured. The medium diameter of these measured values is defined as the fiber diameter (width).

The average fiber length of the cellulose microfiber is preferably 0.01 to 1000 µm, more preferably 0.05 to 500 µm, and particularly preferably 0.1 to 100 µm. When the average fiber length is less than 0.01 µm, there is a concern that it may become difficult to form a network structure of the fiber and a thickening effect may not be obtained. On the other hand, when the average fiber length exceeds 1000 µm, there is a concern that cellulose microfibers may aggregate with each other.

The fiber length of the cellulose microfiber is a value measured with a fiber analyzer "FS5" manufactured by Valmet Corporation.

The axial ratio (fiber length/fiber width) of the cellulose microfiber is preferably 3 to 10000 and more preferably 10 to 1000. When the axial ratio is less than 3, the cellulose microfiber can no longer be said to be fibrous. On the other hand, when the axial ratio exceeds 10000, there is a concern that the viscosity of the dispersion may become too high.

The degree of crystallinity of the cellulose microfiber is preferably 50% to 100%, more preferably 60% to 90%, and particularly preferably 65% to 85%. When the degree of crystallinity is less than 50%, there is a concern that strength and heat resistance may be insufficient.

The degree of crystallinity can be adjusted by, for example, selection of a raw material fiber, a pretreatment, defibration, or the like.

The degree of crystallinity is a value measured by an X-ray diffraction method in accordance with JIS-K0131

(1996) "General Rules for X-ray diffractometric analysis." The cellulose microfiber has an amorphous portion and a crystalline portion, and the degree of crystallinity means the proportion of the crystalline portion in the entire cellulose microfiber.

The total light transmittance of the dispersion of the cellulose microfiber (a solution having a solid content concentration of 0.2%) is preferably 65% or higher, more preferably 70% or higher, and particularly preferably 80% or higher. When the total light transmittance is less than 65%, there is a concern that the transparency may be insufficient.

The total light transmittance of the cellulose microfiber can be adjusted by, for example, selection of a pulp fiber, a pretreatment, defibration, or the like.

The total light transmittance is a measurement value of the total light transmittance (transmittance of 350 to 880 nm light) of a 0.2% (w/v) cellulose microfiber dispersion using a Spectrophotometer U-2910 (Hitachi, Ltd.).

The B-type viscosity of the dispersion in a case where the concentration of the cellulose microfiber is set to 1 mass% (w/w) is preferably 40000 cP or higher, more preferably 40000 to 120000 cP, and particularly preferably 50000 to 100000 cP. When the B-type viscosity is less than 40000 cP, there is a concern that it may become impossible to handle the dispersion as a high-viscosity additive. On the other hand, when the B-type viscosity exceeds 120000 cP, there is a concern that the dispersion may be difficult to mix with other materials when used as an additive.

The B-type viscosity is a measurement value of the water dispersion of the cellulose microfiber having a solid content concentration of 1% in accordance with JIS-Z8803 (2011) "Methods for viscosity measurement of liquid." The B-type viscosity is a resistance torque during the stirring of the dispersion, and a higher B-type viscosity means that the amount of energy required for stirring becomes larger.

### [Production Method]

Next, a production method of the present embodiment will be described.

### (Pretreatment)

Prior to or after the modification of the cellulose fiber with various chemicals such as citric acid, it is possible to perform a pretreatment such as beating on the cellulose fiber as necessary. When the pretreatment is performed on the pulp fiber prior to the defibration of the cellulose fiber, it is possible to significantly reduce the number of times of defibration and to reduce the energy for defibration.

The pretreatment of the cellulose fiber can be performed by a physical method or a chemical method and preferably by a physical method and a chemical method. The pretreatment by a physical method and the pretreatment by a chemical method can be performed simultaneously or separately.

As the pretreatment by a physical method, beating is preferably adopted. When the cellulose fiber is beaten, the cellulose fiber is trimmed. This prevents entanglement of the cellulose fibers (cohesion prevention). From this viewpoint, beating is performed until the freeness of the cellulose fiber preferably reaches 700 ml or less, more preferably reaches 500 ml or less, and particularly preferably reaches 300 ml or less.

The freeness of the cellulose fiber is a value measured in accordance with JIS P8121-2 (2012). In addition, beating can be performed using, for example, a refiner, a beater, a kneader, or the like.

Examples of the pretreatment by a chemical method include hydrolysis of a polysaccharide with an acid (acid treatment), hydrolysis of a polysaccharide with enzyme (enzyme treatment), swelling of a polysaccharide with an alkali (alkali treatment), oxidation of a polysaccharide with an oxidant (oxidation treatment), reduction of a polysaccharide with a reducing agent (reduction treatment), and the like. Here, the pretreatment by a chemical method is preferably the enzyme treatment, and it is more preferable to further perform one, or two or more treatments selected from the acid treatment, the alkali treatment, and the oxidation treatment. The alkali treatment will be described in detail below.

As a method for the alkali treatment, for example, there is a method in which the cellulose fiber is immersed in an alkali solution before the introduction of citric acid or the like.

An alkali compound that is contained in the alkali solution may be an inorganic alkali compound or an organic alkali compound. Examples of the inorganic alkali compound include hydroxides of alkali metals or alkaline earth metals, carbonates of alkali metals or alkaline earth metals, phosphates of alkali metals or alkaline earth metals, and the like. In addition, examples of the hydroxides of alkali metals include lithium hydroxide, sodium hydroxide, potassium hydroxide, and the like. Examples of the hydroxides of alkaline earth metals include calcium hydroxide, and the like. Examples of the carbonates of alkali metals include lithium carbonate, lithium bicarbonate, potassium carbonate, potassium bicarbonate, sodium carbonate, sodium bicarbonate, and the like. Examples of the carbonates of alkaline earth metal include calcium carbonate and the like. Examples of the phosphorous oxoacid salts of alkali metals include lithium phosphate, potassium phosphate, trisodium phosphate, disodium hydrogen phosphate, and the like. Examples of the phosphates of alkaline earth metals include calcium phosphate, calcium hydrogen phosphate, and the like.

Examples of the organic alkali compound include ammonia, aliphatic amines, aromatic amines, aliphatic ammonium, aromatic ammonium, heterocyclic compounds and hydroxides thereof, carbonates, phosphates, and the like. Specific examples thereof include ammonia, hydrazine, methylamine, ethylamine, diethylamine, triethylamine, propylamine, dipropylamine, butylamine, diaminoethane, diaminopropane, diaminobutane, diaminopentane, diaminohexane, cyclohexylamine, aniline, tetramethylammonium hydroxide, tetraethylammonium hydroxide, tetrapropylammonium hydroxide, tetrabutyl ammonium hydroxide, benzyltrimethylammonium hydroxide, pyridine, N,N-dimethyl-4-aminopyridine, ammonium carbonate, ammonium hydrogencarbonate, diammonium hydrogenphosphate, and the like.

A solvent for the alkali solution may be any of water and an organic solvent and is preferably a polar solvent (water or a polar organic solvent such as alcohol) and more preferably a water-based solvent containing at least water.

The pH at 25°C of the alkali solution is preferably 9 or higher, more preferably 10 or higher, and particularly preferably 11 to 14. When the pH is 9 or higher, the yield of the cellulose microfiber becomes high. However, when the pH exceeds 14, the handleability of the alkali solution deteriorates.

In the production method of the present embodiment, first, an alkali is added to the water dispersion of the cellulose fiber to adjust the pH to 9 or higher, preferably 10 or higher, and more preferably 11 or higher. Since the addition of the alkali swells the cellulose fibers and separates the fibers, crosslinking caused by the addition of citric acid becomes difficult. When the pH is lower than 9, since defibration by a crosslinking reaction becomes difficult, and the cellulose fiber does not become a cellulose microfiber, there is a concern that the viscosity and the transparency may not become sufficient. However, when the alkali concentration (causticity) is 18% or higher, there is a concern that regenerated cellulose may be formed.

As an alkali to be added, for example, an alkali enabling the dispersion of the cellulose fiber to obtain a pH of 9 to 14, for example, sodium hydroxide, potassium hydroxide, ammonia water, or the like, can be used. However, sodium hydroxide has a high capability of swelling the fiber and is thus preferably used.

### (Addition of Various Chemicals)

Next, at least any one reactant (reaction solution) of a polyvalent carboxylic acid and a polyvalent carboxylic acid metal salt is added to the dispersion of the cellulose fiber.

As the reactant (a polyvalent carboxylic acid or a polyvalent carboxylic acid metal salt), for example, aside from citric acid containing three carboxy groups, malic acid, aconitic acid, malonic acid, succinic acid, and the like can be used.

The amount of the reactant added is preferably 1 to 20 mmol and more preferably 2 to 18 mmol relative to 1 g of the cellulose fiber. When the addition amount is less than 1 mmol, there is a concern that the degree of esterification may become insufficient and the transparency and the viscosity may become insufficient. On the other hand, when the addition amount exceeds 20 mmol, there is a concern that the degree of esterification may peak.

For the amount of the reactants introduced, the modified cellulose fiber (dispersion) having a concentration of 0.2 mass% is measured by a neutralization titration method using an automatic titrator auto-titrator AUT-801 (DKK-TOA Corporation). An automatic titration method refers to measurement in which a treatment is performed with an ion exchange resin in a mass ratio relative to the dispersion having a concentration of 0.2 mass% of 10:1, and titration is performed using 0.05 M sodium hydroxide in 0.1 mL increments. The measured pHs are plotted to create a dissociation curve, and two inflection points are observed. Between the two inflection points, the inflection point obtained first is regarded as a first inflection point, and the inflection point obtained next is regarded as a second inflection point.

Preferably, at least any one of urea and a urea derivative (hereinafter also simply referred to as "the urea or the like") is added at the same time as the addition of the reactant such as citric acid or before or after the addition of the reactant such as citric acid. When the urea or the like is added, since hydrogen bonds between the cellulose fibers break, and the cellulose fibers swell and separate from each other, crosslinking by the addition of citric acid becomes more difficult. As the urea or the like, for example, urea, thiourea, biuret, phenyl urea, and the like can be used. These urea or urea derivatives may be used singly or in combination. Here, urea is preferably used.

When heated, the urea or the like is decomposed into isocyanic acid and ammonia as shown in the following reaction formula (1). In addition, the isocyanic acid is highly reactive and modifies hydroxyl groups of cellulose to carbamate groups as shown in the following reaction formula (2). Therefore, when the urea or the like is added to the cellulose fiber, the introduction of carbamate groups proceeds.

NH₂-CO-NH₂ → HN=C=O+NH₃ ... (1)

Cell-OH+H-N=C=O → Cell-O-CO-NH₂ ... (2)

In the reaction formula (2), "Cell" refers to a cellulose molecule.

The amount of the urea or the like added is preferably 0.1 to 5.0 mmol and more preferably 0.2 to 4.0 mmol relative to 1 g of the cellulose fiber. Even when the addition amount exceeds 5.0 mmol, there is a concern that the effect of the addition of the urea or the like may peak.

When various chemicals are added, the cellulose fiber may be in a dry state, in a wet state, or in a dispersion state. In addition, the various chemicals may be in a powder state or in an aqueous solution state. However, it is preferable to add the chemicals in an aqueous solution state to the cellulose fiber in a dry state since the uniformity of the reaction is high.

### (Heating)

The cellulose fiber to which the various chemicals have been added is heated, and a modification reaction with citric acid or the like proceeds. This heating temperature is preferably 110°C to 200°C and more preferably 120°C to 160°C. When the heating temperature is lower than 110°C, there is a concern that the reaction between citric acid and pulp may not occur. On the other hand, when the heating temperature exceeds 200°C, deterioration of the cellulose fiber rapidly proceeds, which may cause coloration or a decrease in viscosity.

The pH at the time of heating the cellulose fiber to which the various chemicals such as citric acid have been added is preferably 2.0 to 7.0 and more preferably 3.0 to 6.0. In this respect, the pH of the dispersion becomes 9 or higher, which is alkaline, due to the addition of the alkali such as sodium hydroxide as described above, but the pH becomes 2.0 to 7.0 due to the addition of the various chemicals such as citric acid. However, when the pH is lower than 2.0, there is a concern that the cellulose fiber may be colored. On the other hand, when the pH exceeds 7.0, citric acid turns into trisodium citrate, and there is a concern that the reaction may not proceed and the transparency and the viscosity may become insufficient.

The cellulose fiber to which the various chemicals have been added is preferably heated until the cellulose fiber is dried. Specifically, the cellulose fiber is dried until the moisture content of the cellulose fiber preferably reaches 20% or less and more preferably reaches 10% or less.

The reaction time of the cellulose fiber to which the various chemicals such as citric acid have been added is, for example, 1 to 3600 seconds and preferably 10 to 1000 seconds. When the reaction time is too long, there is a concern that the cellulose fiber may turn yellow. On the other hand, when the reaction time is too short, there is a concern that the modification with citric acid or the like may not sufficiently proceed.

As a device for heating the cellulose fiber to which the various chemicals such as citric acid have been added, for example, a hot air dryer, a kiln, a heated kneader, a paper making machine, a dry pulp machine, and the like can be used.

### (Washing)

The above-described cellulose fiber is preferably washed prior to defibration. When the cellulose fiber is washed, it is possible to wash away the remaining various chemicals such as citric acid and alkali such as sodium hydroxide.

The cellulose fiber can be washed using, for example, water, an organic solvent, or the like.

### (Re-addition of Alkali)

Next, an alkali such as sodium hydroxide is added again to the cellulose fiber to hydrolyze the cellulose fiber. This re-addition of the alkali breaks the crosslinking of the cellulose fibers, and the degree of crosslinking becomes low.

This re-addition of the alkali is performed so that the pH reaches 8 to 14 and preferably 9 to 13. When the pH is lower than 8, there is a concern that crosslinking may still remain. On the other hand, when the pH exceeds 14, there is a concern that all of the citric acid groups may be detached.

The alkali that can be used in this step is the same as the alkali that is added for the first time. In addition, the true meaning of the expression "alkali" or "alkali treatment" in the above description is "hydrolysis." The reason therefor is that even an acidic solution is likely to be capable of breaking crosslinking.

Here, a crosslinked structure and an ester structure will be briefly described.

Before hydrolysis, the structure of cellulose modified with citric acid is in a state where a crosslinked structure and an ester structure are present in a mixed manner. In addition, when there are many crosslinked structures, it is thought that defibration is difficult until the transparency becomes high. In contrast, when the crosslinked structures are broken by hydrolysis and the number of ester structures becomes larger than that before hydrolysis, defibration becomes easy. However, it is thought that it is difficult to break all of the crosslinked structures and leave only the ester structures. That is, when the chemicals are continuously added, all of the crosslinked structures and the ester structures are broken, and defibration becomes difficult. In addition, when the number of the crosslinked structures increases, defibration is difficult, and the transparency thus does not become high, but there is a tendency that the viscosity becomes high due to the crosslinked structure. As the number of the ester structures increases, defibration becomes easy, and the transparency thus becomes high, but there is a tendency that the viscosity is low as compared with modified cellulose in which many crosslinked structures are present.

### (Defibration)

The cellulose fiber to which the alkali has been added again or the like is defibrated (micro-fibrillation treatment). Due to this defibration, the cellulose fiber is micro-fibrillated and turns into a cellulose microfiber (cellulose nanofiber (CNF)).

When the cellulose fiber is defibrated, the cellulose fiber is preferably put into a slurry state. The solid content concentration of this slurry is preferably 0.1 to 20 mass%, more preferably 0.5 to 10 mass%, and particularly preferably 1.0 to 5.0 mass%. When the solid content concentration is within the above-described range, efficient defibration is possible.

The cellulose fiber can be defibrated by selecting and using one, or two or more means from, for example, homogenizers such as a high-pressure homogenizer or a high-pressure homogenization device, grinders, stone mills such as a mill, refiners such as a conical refiner and a disc refiner, various bacteria, and the like. Here, the cellulose fiber is preferably defibrated using a device or method for micro-fibrillating the cellulose fiber by a water flow, particularly, a high-pressure water flow. According to this device or method, the dimensional uniformity and dispersion uniformity of a cellulose microfiber to be obtained become extremely high. In contrast, when the cellulose fiber is defibrated using, for example, a grinder that grinds the cellulose fiber between rotating grinding stones, it is difficult to uniformly micro-fibrillate the cellulose fiber, and there is a concern that fiber lumps that cannot be solved may remain in some portions in some cases.

As the grinder that is used for the defibration of the cellulose fiber, there are, for example, MASSCOLLOIDER manufactured by Masuko Sangyo Co., Ltd. and the like. In addition, as the device for micro-fibrillating the cellulose fiber by a high-pressure water flow, there are, for example, STAR BURST (registered trademark) from Sugino Machine Limited, NANOVATER (registered trademark) from Yoshida Kikai Co., Ltd. and the like. In addition, as a high-speed rotation type homogenizer that is used for the defibration of the cellulose fiber, there are CLEARMIX-11S manufactured by MTechnique Co., Ltd. and the like.

As the device for defibrating the cellulose fiber by a high-pressure water flow, a high-pressure homogenizer is preferably used. The high-pressure homogenizer refers to a homogenizer having a capability of spraying the slurry of the cellulose fiber at a pressure of, for example, 10 MPa or higher and preferably 100 MPa or higher. When the cellulose fiber is treated with the high-pressure homogenizer, collision between the cellulose fibers, a pressure difference, microcavitation, and the like work, and the defibration of the cellulose fiber effectively occurs. Therefore, the number of times of the treatment for the defibration can be reduced, and it is possible to increase the production efficiency of the cellulose microfiber.

The defibration of the cellulose fiber is preferably performed so that the average fiber width, average fiber length, degree of crystallinity, and the like of the cellulose microfiber to be obtained have desired values or evaluations described above.

### Examples

Next, examples of the present invention will be described.

To needle-tree bleached kraft pulp sheets (solid content: 46% solid), sodium hydroxide was added such that the molar ratio to citric acid reached 1:1, water was added such that the mass ratio to the pulp solid content reached 1:15, and the components were mixed with a mixer for 10 minutes. After that, a predetermined amount of citric acid was added thereto, and the components were further mixed in the mixer for 10 minutes. After the mixing, the components were heated and dried in a hot air dryer at 130°C for 4 hours and reacted together. After the reaction, pulps were washed until filtrate becomes neutral, thus obtaining modified pulps. To the modified pulps, water was added to reach 1 wt%, sodium hydroxide was then added to reach predetermined pHs, and hydrolysis was performed for 1 hour. Furthermore, the hydrolyzed modified pulps were washed to be neutral. The hydrolyzed modified pulps were defibrated to produce cellulose microfibers, and various tests were performed thereon. The defibration was performed using a high-pressure homogenizer.

The amounts of citric acid, sodium hydroxide, and urea added, the heating temperatures and times, and the pHs during the hydrolysis were set as shown in Table 1. The physical properties and evaluation of the obtained cellulose microfibers are shown in Table 2. Methods for evaluating the B-type viscosity and the light transmittance were as described above.

**[Table 1]**

| | Alkali treatment step | | Chemical addition step | | Drying reaction step | | Hydrolysis step |
|---|---|---|---|---|---|---|---|
| | Sodium hydroxide | Urea | Water | Citric acid | Temperature | Time | pH |
| | mol/PT | kg/PT | kg/PT | kg/P T | °C | Minutes | - |
| Test Example 1 | 14680 | - | 15000 | 3000 | 130 | 240 | 10 |
| Test Example 2 | 1.5 times the number of times of micro-fibrillation treatment in Test Example 1 | | | | | | |
| Test Example 3 | 12720 | 100 | 15000 | 2600 | 130 | 240 | 10 |
| Test Example 4 | 1.5 times the number of times of micro-fibrillation treatment in Test Example 3 | | | | | | |
| Test Example 5 | 12720 | 100 | 15000 | 2600 | 130 | 240 | 11 |
| Test Example 6 | 1.5 times the number of times of micro-fibrillation treatment in Test Example 5 | | | | | | |
| Test Example 7 | 12720 | - | 15000 | 2600 | 130 | 240 | 10 |
| Test Example 8 | 7200 | - | 15000 | 1500 | 130 | 240 | 10 |
| Test Example 9 | 5000 | - | 15000 | 1500 | 130 | 150 | 10 |
| Test Example10 | 14680 | - | 15000 | 3000 | 130 | 240 | 9 |

**[Table 2]**

| | First dissociated acid amount | Second dissociated acid amount | First dissociated acid amount/ second dissociated acid amount | B-type viscosity | Transmittance |
|---|---|---|---|---|---|
| | | | | | |
| | mmol/ g | mmol/ g | | cP | % |
| Test Example 1 | 0.43 | 1.70 | 0.25 | 73,900 | 71.23 |
| Test Example 2 | 0.43 | 1.70 | 0.25 | 101,200 | 85.93 |
| Test Example 3 | 0.50 | 1.80 | 0.28 | 80,300 | 77.96 |
| Test Example 4 | 0.50 | 1.80 | 0.28 | 108,500 | 89.03 |
| Test Example 5 | 0.50 | 1.10 | 0.45 | 85,700 | 92.64 |
| Test Example 6 | 0.50 | 1.10 | 0.45 | 97,850 | 97.34 |
| Test Example 7 | 0.55 | 1.65 | 0.33 | 77,900 | 69.87 |
| Test Example 8 | 0.32 | 1.09 | 0.29 | 57,100 | 33.43 |
| Test Example 9 | 0.32 | 1.23 | 0.26 | 20,800 | 17.44 |
| Test Example 10 | 0.34 | 1.84 | 0.18 | 33,000 | 35.01 |

### Industrial Applicability

The present invention is available as a modified cellulose fiber and a modified cellulose microfiber.

## Claims

1. A modified cellulose fiber, wherein the modified cellulose fiber is modified with a polyvalent carboxylic acid group,
a first dissociated acid amount/second dissociated acid amount is 0.25 to 1.0, and a first dissociated acid amount is 0.35 mmol/g or more.

2. The modified cellulose fiber according to claim 1, wherein the modified cellulose fiber is carbamated.

3. The modified cellulose fiber according to claim 1, wherein a total light transmittance of a dispersion (concentration: 0.2 mass%) is 65% or more, and a B-type viscosity of a dispersion (concentration: 1.0 mass%) is 40000 cP or higher.

4. The modified cellulose fiber according to claim 1, wherein the polyvalent carboxylic acid is citric acid.

5. A modified cellulose microfiber, wherein the modified cellulose fiber according to any one of claims 1 to 4 has an average fiber diameter of 100 nm or less.
